# EUROPÄISCHE PATENTSCHRIFT

(11) **EP 1 454 809 B1**
(45) Veröffentlichungstag und Bekanntmachung des Hinweises auf die Patenterteilung: **07.09.2005**
(21) Anmeldenummer: 04004623.7
(22) Anmeldetag: 01.03.2004
(51) Int. Cl.: B62B 3/02, A47L 13/51

(54) **Modularer Reinigungs- oder Beistellwagen**
Modular cleaning or utility trolley
Chariot modulaire de nettoyage ou à usage multiple

(30) Priorität: 05.03.2003 DE 10309412
(43) Veröffentlichungstag der Anmeldung: 08.09.2004
(73) Patentinhaber: Avet AG, 8630 Rüti/Zürich (CH)
(72) Erfinder: Sacks, Roland, 8608 Bubikon (CH)
(74) Vertreter: Maucher, Wolfgang

(56) Entgegenhaltungen:
- EP-A- 0 381 240
- EP-A- 1 190 664
- DE-A- 4 322 626
- DE-A- 10 010 852
- DE-U- 20 209 597
- US-A- 3 868 123
- US-A- 4 765 646
- US-B1- 6 497 423

## Beschreibung

Die Erfindung betrifft einen Reinigungs- oder Beistellwagen. Solche Reinigungswagen sind bereits in verschiedenen Ausführungen bekannt. Auf solchen Reinigungswagen kann das Reinigungspersonal verschiedene Reinigungsmittel, Putzeimer und dergleichen Reinigungsutensilien bequem mit sich führen. Um die zahlreichen Reinigungsutensilien mitführen zu können, sind derartige Reinigungswagen vergleichsweise groß und sperrig ausgestaltet. Die sperrige Ausgestaltung solcher Reinigungswagen erschwert jedoch deren Transport und Bevorratung nicht unerheblich. Sind solche Reinigungswagen aber aus einer Vielzahl von Einzelteilen zusammengebaut, gestaltet sich der Zusammenbau dieser Reinigungswagen vergleichsweise zeitaufwendig und schwierig.

So ist aus der DE-U-20209597 bereits ein Reinigungswagen mit einem fahrbaren Gestellrahmen bekannt, der mit unterschiedlichen Aufbauten bestückbar ist. Um das Fahrgestell mit einem der unterschiedlichen Aufbauten lösbar verbinden zu können, sind an zwei gegenüberliegenden Längsseiten des Gestellrahmens Adapterelemente mit jeweils mehreren Einstecköffnungen vorgesehen.

Man hat auch bereits einen als Nasswischwagen ausgestalteten Reinigungswagen geschaffen, der ein aus lösbaren Einzelteilen nach Art eines Baukastensystems bestehendes fahrbares Untergestell hat (Vgl. DE-A-43 22 626). Dieses Untergestell lässt sich zur Vergrößerung oder Verkleinerung des vorbekannten Nasswischwagens und gegebenenfalls zur Aufnahme eines zweiten Eimers umbauen. Das Untergestell ist dazu als ein aus Profilstangen gebildeter Halterahmen ausgebildet, der mittels Eck- und T-Profilen umgebaut und über Schraubverbindungen oder Kugelsicherungen fixiert werden kann.

Aus der US-A-6497423 ist ein Reinigungswagen bekannt, dessen Boden durch ein einstückiges und mit Rollen versehenes Kunststoffformteil gebildet wird. An diesem Kunststoffformteil des vorbekannten Reinigungswagens sind vertikale Tragstangen montierbar, an denen Fachböden befestigt werden können.

Es besteht daher auch weiterhin insbesondere die Aufgabe, einen Reinigungswagen der eingangs erwähnten Art zu schaffen, der trotz seiner Platz bietenden Größe rasch und einfach aus seinen Einzelteilen zusammengebaut werden kann.

Eine erfindungsgemäße Lösung dieser Aufgabe besteht darin, dass der Reinigungswagen zumindest zwei bodenseitige Formteile aufweist, die über wenigstens ein stab- oder stangenförmiges Verbindungselement miteinander verbunden sind, wobei dem Verbindungselement an den Formteilen jeweils mindestens ein Rastelement mit zumindest einer Federzunge zugeordnet ist, wobei die zumindest eine Federzunge in Haltestellung mit einem Rastvorsprung in eine Rastausnehmung am Verbindungselement eingreift und wobei dem Rastelement ein ringförmiges Sicherungselement zugeordnet ist, welches in Haltestellung derart über das Rastelement aufschiebbar ist, dass sein Ringumfang ein Auslenken der Federzunge und ein Ausrasten ihres Rastvorsprunges aus der Rastausnehmung verhindert.

Der erfindungsgemäße Reinigungswagen weist zumindest zwei bodenseitige Formteile auf, die über wenigstens ein stab- oder stangenförmiges Verbindungselement miteinander verbunden sind. Dem zumindest einen Verbindungselement ist an jedem Formteil jeweils mindestens ein Rastelement mit zumindest einer Federzunge zugeordnet, die in Haltestellung mit einem Rastvorsprung in eine Rastausnehmung am Verbindungselement eingreift. Jedem Rastelement ist wiederum ein ringförmiges Sicherungselement zugeordnet, welches in Haltestellung derart über das Rastelement aufschiebbar ist, dass ein Ringumfang ein Auslenken der Federzunge und ein Ausrasten ihres Rastvorsprunges aus der Rastausnehmung verhindert. Durch Einfügen des zumindest einen Verbindungselements in die an den Formteilen vorgesehenen Rastelemente und Aufschieben der den Rastelementen zugeordneten Sicherungselemente lässt sich auf einfache und rasche Weise und ohne Zuhilfenahme weiteren Werkzeugs eine sichere und belastbare Verbindung dieser Bauteile erreichen.
Dabei wird eine sichere und belastbare Verbindung noch zusätzlich begünstigt, wenn das Rastelement stutzenförmig ausgestaltet und aus zumindest zwei, vorzugsweise aus vier Federzungen gebildet ist.

Um ein unbeabsichtigtes Abrutschen des Sicherungselements vom Rastelement zu vermeiden, und um das Sicherungselement in seiner Sicherungsposition zu halten, ist es vorteilhaft, wenn zwischen dem Rastelement und dem Sicherungselement eine Schraubverbindung oder eine in Sicherungsposition wirksame Rastverbindung vorgesehen ist.

Eine bevorzugte Ausführungsform gemäß der Erfindung sieht vor, dass der Reinigungswagen zumindest eine Arbeits- und/oder Ablagefläche hat, die aus zumindest zwei, vorzugsweise aus drei, insbesondere formidentischen Formteilen gebildet ist, und dass die Formteile mittels zumindest zwei voneinander beabstandeten stab- oder stangenförmigen Verbindungselementen verbunden sind.

Um dem Reinigungswagen auch die benötigte Stauhöhe zu geben, kann das zumindest eine Formteil eines solchen Reinigungswagens mit einem Vertikalträger verbindbar sein. Dabei sieht ein weiterer erfindungsgemäßer Vorschlag vor, dass der Vertikalträger als im Querschnitt unrunder Profilstab ausgestaltet ist, der in die komplementär geformte Aufnahmeöffnung einer am Formteil vorgesehenen Profilstab-Aufnahme einsetzbar ist.

Der in die Profilstab-Aufnahme eingesetzte Profilstab lässt sich in Gebrauchsstellung bequem und fest am Reinigungswagen sichern, wenn der Profilstab wenigstens eine Durchstecköffnung hat, die in Gebrauchsstellung mit einer ihr zugeordneten Durchstecköffnung an zumindest einer die Aufnahmeöffnung begrenzenden Umfangseite, vorzugsweise an gegenüberliegenden Umfangseiten der Profilstab-Aufnahme fluchtet und wenn in die einander zugeordneten Durchstecköffnungen eine Sicherungsschraube, ein Sicherungssplint oder dergleichen Sicherungsmittel einsetzbar ist.

Der mit der Herstellung sowie der Montage des erfindungsgemäßen Reinigungswagens verbundene Aufwand lässt sich noch zusätzlich reduzieren, wenn die Profilstab-Aufnahme ein in einer Einsetzöffnung des Formteiles verrastbares und vorzugsweise ringförmiges Einsetzteil aufweist.

Dabei kann eine vom Formteil separate Profilstab-Aufnahme sicher und fest am Formteil montiert werden, wenn die die Aufnahmeöffnung begrenzende Umfangswandung der Profilstab-Aufnahme oder ihres Einsetzteiles zumindest einen auslenkbaren Wandungsabschnitt hat, an dem zumindest ein, in einer zugeordneten Rastöffnung des Profilstabes verrastbarer Vorsprung vorgesehen ist.

Dabei sieht eine bevorzugte und besonderes belastbare Ausführungsform gemäß der Erfindung vor, dass die die Aufnahmeöffnung begrenzende Umfangswandung der Profilstab-Aufnahme oder ihres Einsetzteiles zumindest auf zwei gegenüberliegenden Umfangsseiten jeweils einen auslenkbaren Wandungsabschnitt hat.

Um am Profilstab mehrere übereinanderliegende Arbeits- bzw. Ablageebenen zu bilden, ist es vorteilhaft, wenn an dem zumindest einen Profilstab eine Einstecköffnung zur Aufnahme eines stabförmigen Querträgers vorgesehen ist, wenn dem Querträger zumindest ein Querträger-Halter zugeordnet ist, der mit einem Haltering den Profilstab umgreift, wenn der Querträger-Halter aus zwei Ringteilen gebildet ist, die sich zum Haltering ergänzen, wenn an den Ringteilen jeweils eine Anformung vorgesehen ist, welche Anformungen sich zu einer stutzenförmigen Querträger-Aufnahme ergänzen, wenn an den Anformungen jeweils zumindest ein Rastvorsprung vorgesehen ist, welche Rastvorsprünge in eine zugeordnete Rastausnehmung am Querträger eingreifen und wenn für jeden Querträger-Halter ein ringförmiges Sicherungselement vorgesehen ist, das derart auf die Querträger-Aufnahme aufschiebbar ist, dass die Rastvorsprünge in den Rastausnehmungen gesichert sind.

Damit sich in Sicherungsposition nicht die zwischen den Sicherungselementen und den Querträger-Haltern vorgesehene Verbindung unbeabsichtigt lösen kann, ist es vorteilhaft, wenn zwischen dem einen Querträger-Halter zugeordneten Sicherungselement und der Querträger-Aufnahme eine Schraubverbindung oder eine in Sicherungsposition wirksame Rastverbindung vorgesehen ist.

Weiterbildungen gemäß der Erfindung sind in weiteren Ansprüchen dargestellt. Nachstehend wird die Erfindung anhand vorteilhafter Ausführungen in Verbindung mit den Ansprüchen sowie der Zeichnung noch näher erläutert.

Es zeigt:
- Fig. 1: einen Reinigungswagen, der rasch und bequem aus mehreren Bauteilen zusammensetzbar ist,
- Fig. 2: den aus drei formidentischen Formteilen gebildeten Boden des in Fig.1 dargestellten Reinigungswagens, wobei die Formteile über zwei voneinander beabstandete Verbindungselemente miteinander verbunden sind,
- Fig. 3: eines der Formteile des in den Fig.1 und 2 dargestellten Reinigungswagens im Bereich seiner Rastverbindung mit einem der Verbindungselemente,
- Fig. 4: eines von zwei, sich zu einem Querträger-Halter ergänzenden Ringteiles des in den Fig.1 bis 3 dargestellten Reinigungswagens,

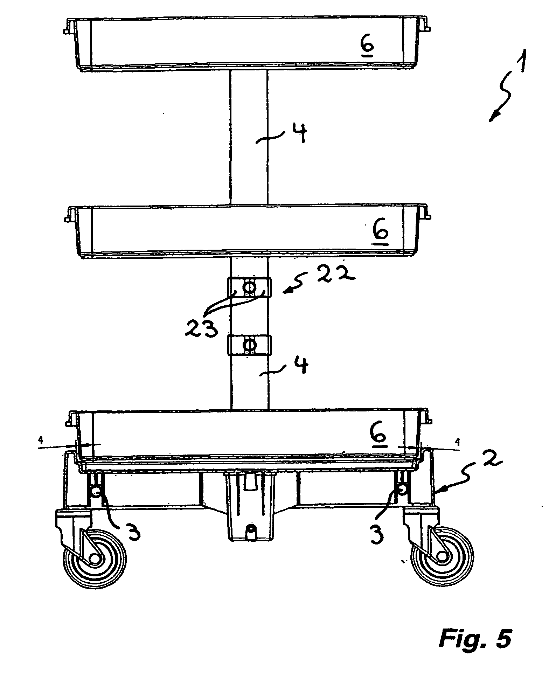

- Fig. 5: den Reinigungswagen aus den Fig.1 bis 4 in einem Längsschnitt,
- Fig. 6: ein Formteil des Reinigungswagens aus den Fig.1 bis 5 in einem Querschnitt,
- Fig. 7: ein zu einer Profilstab-Aufnahme gehörendes Einsetzteil des Reinigungswagens gemäß den Fig.1 bis 6 in einer perspektivischen Darstellung, wobei das Einsetzteil in eine Einsetzöffnung des Formteiles aus Fig.6 verrastbar ist, und
- Fig. 8: das Einsetzteil aus Fig.7 in einem Längsschnitt.

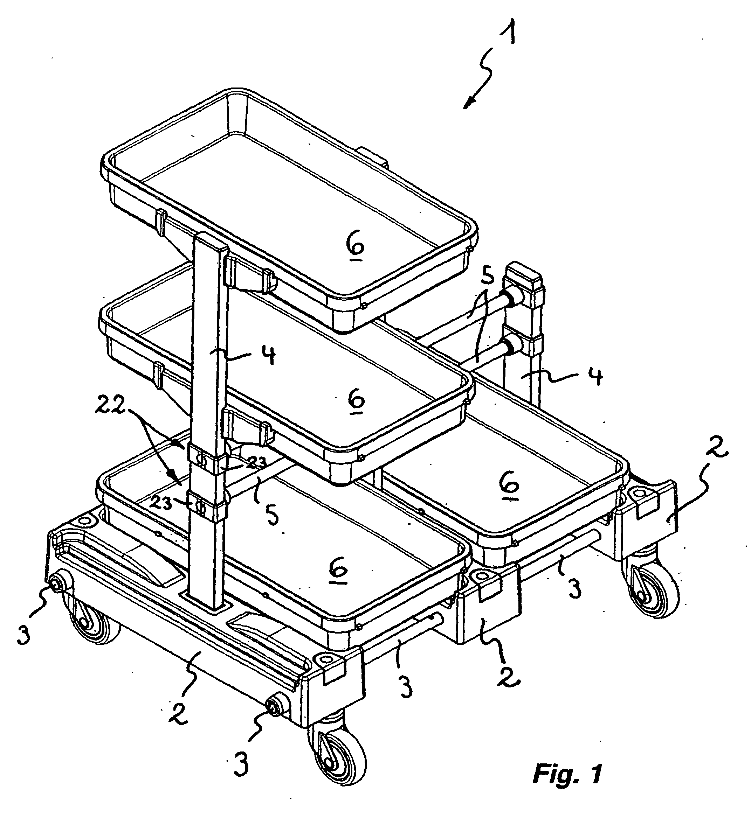

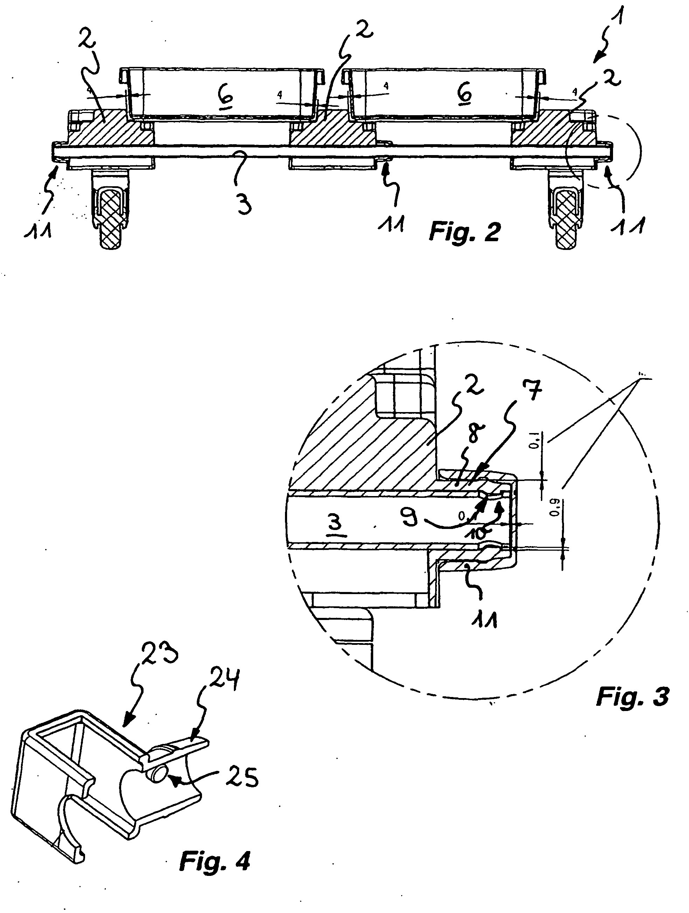

In Fig.1 ist ein Reinigungswagen 1 dargestellt, der rasch und bequem und ohne Zuhilfenahme weiteren Werkzeugs aus einzelnen Bauteilen zusammengebaut werden kann. Der Reinigungswagen 1 weist einen in Fig.2 noch näher gezeigten Boden auf, der aus drei formidentischen Formteilen 2 gebildet ist. Diese Formteile 2 sind über zwei voneinander beabstandete und stab- oder stangenförmig ausgebildete Verbindungselemente 3 sicher und fest verbunden.

Der Reinigungswagen 1 weist zwei Vertikalträger auf, die durch im Querschnitt unrunde und hier viereckige Profilstäbe 4 gebildet sind. Diese Vertikalträger sind über zwei stab- oder stangenförmige Querträger 5 verbunden. Auf dem Wagenboden und an den Vertikalträgern des Reinigungswagens 1 sind Aufnahmewannen 6 gehalten, in denen die benötigten Reinigungsutensilien abgelegt werden können.

In Fig.2 ist gezeigt, dass die als Kunststoff-Spritzgussteile hergestellten Formteile 2 des Reinigungswagens 1 über zwei stab- oder stangenförmige Verbindungselemente 3 miteinander verbunden sind. An jedem Formteil 2 ist dazu jedem Verbindungselement 3 zumindest ein stutzenförmiges Rastelement 7 zugeordnet, das jeweils aus vier Federzungen 8 gebildet ist.

In Fig.3 ist erkennbar, dass jede Federzunge 8 in Haltestellung mit einem Rastvorsprung 9 in eine Rastausnehmung 10 am Verbindungselement 3 eingreift. Dabei ist jedem Rastelement 7 wiederum ein ringförmiges Sicherungselement 11 zugeordnet, welches in Haltestellung derart über das Rastelement aufschiebbar ist, dass sein Ringumfang ein Auslenken der Federzungen 8 und ein Ausrasten ihrer Rastvorsprünge 9 aus den Rastausnehmungen 10 verhindert. Um das Sicherungselement 11 gegen ein unbeabsichtigtes Lösen aus seiner Sicherungsposition zu sichern, ist zwischen den Rastelementen 7 und den ihnen zugeordneten Sicherungselementen 11 jeweils eine in Sicherungsposition wirksame Rastverbindung vorgesehen.

Um auch die als Vertikalträger dienenden Profilstäbe 4 rasch und bequem und ohne zusätzliches Werkzeug an den Formteilen 2 verankern zu können, sind die Profilstäbe 4 jeweils in eine komplementär geformte Aufnahmeöffnung 12 einer an den Formteilen vorgesehenen Profilstab-Aufnahme 13 einsetzbar.

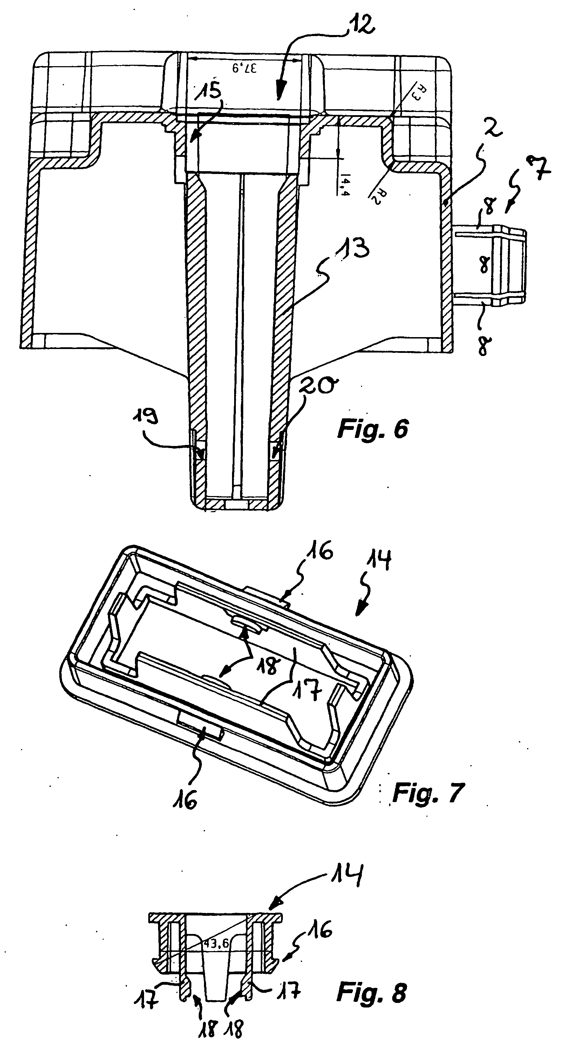

Die Profilstab-Aufnahme 13 weist mündungsseitig ein in den Fig.7 und 8 näher dargestelltes Einsetzteil 14 auf, das in einer mittig zur Längserstreckung des Formteiles 2 angeordneten Einsetzöffnung 15 mittels Rastmitteln 16 verrastbar ist.

Die die Aufnahmeöffnung 12 mündungsseitig begrenzende Umfangswandung des ringförmigen Einsetzteiles 14 weist an zwei gegenüberliegenden Längsseiten jeweils einen auslenkbaren Wandungsabschnitt 17 auf, wobei an den Wandungsabschnitten 17 jeweils zumindest ein, in einer zugeordneten Rastöffnung oder dergleichen Rastvertiefung des Profilstabes 4 verrastbarer Rastvorsprung 18 vorgesehen ist.

Um die Profilstäbe 4 an den Formteilen 2 unverlierbar verankern zu können, ist an jedem Profilstab 4 wenigstens eine Durchstecköffnung vorgesehen, die in Gebrauchsstellung jeweils mit einer ihr zugeordneten Durchstecköffnung 19, 20 an den einander gegenüberliegenden Längsseiten der Profilstab-Aufnahme 13 fluchtet. Durch die miteinander fluchtenden Durchstecköffnungen von Profilstab 4 und Profilstab-Aufnahme 13 ist eine Sicherungsschraube als Sicherungsmittel einsetzbar.

Die beiden Vertikalträger 4 des Reinigungswagens 1 sind über stab- oder stangenförmige, im Querschnitt runde Querträger 21 verbunden. Diese Querträger 21 greifen beidseits in Einstecköffnungen an den Profilstäben 4 ein. Um die Querträger 21 in axialer Richtung an den Vertikalträgern 4 zu sichern, sind Querträger-Halter 22 vorgesehen. Die Querträger-Halter 22 weisen zwei formidentische Ringteile 23 auf, von denen ein Ringteil 23 in Fig.4 näher dargestellt ist. Die beiden Ringteile 23 jedes Querträger-Halters 22 ergänzen sich zu einem den Profilstab umgreifenden Haltering. An den formidentischen Ringteilen 23 des Querträger-Halters 22 sind Anformungen 24 vorgesehen, die sich ihrerseits zu einer stutzenförmigen Querträger-Aufnahme ergänzen. Aus Fig.4 wird deutlich, dass an den Anformungen 24 innenseitig jeweils zumindest ein Rastvorsprung 25 vorgesehen ist. Diese an den Ringteilen 23 vorgesehenen Rastvorsprünge 25 greifen in eine zugeordnete Rastausnehmung an den Querträgern 21 ein. Für jeden Querträger-Halter ist ein Sicherungsmittel 26 vorgesehen, das derart auf eine stutzenförmige Querträger-Aufnahme aufschiebbar ist, dass die diese Querträger-Aufnahme bildenden Ringteile 23 fest und unverlierbar aneinander und am Querträger gehalten sind. Um die Verbindung zwischen dem Sicherungsmittel 26 und den Ringteilen 23 des Querträger-Halters 22 möglichst sicher zu gestalten, ist es vorteilhaft, wenn zwischen den Anformungen 24 und dem darauf aufgeschobenen Sicherungsmittel 26 eine Schraubverbindung oder eine in Sicherungsposition wirksame Rastverbindung vorgesehen ist.

Der hier dargestellte Reinigungswagen 1 kann aus einzelnen Bauteilen rasch und bequem zusammengebaut werden. In auseinandergenommenem Zustand ist der Reinigungswagen 1 platzsparend zu verstauen und zu transportieren. In zusammengebautem Zustand bietet der Reinigungswagen 1 eine belastbare und große Ablagefläche. Da der hier dargestellte Reinigungswagen aus einzelnen Bauteilen zusammengesetzt wird, ist eine modulare Bauweise dieses Reinigungswagens 1 möglich, die den Zusammenbau dieses Reinigungswagens 1 auch in verschiedenen Ausführungsformen erlaubt. Der hier dargestellte Wagen ist auch als Beistellwagen beispielsweise in einer Werkstatt zum Ablegen des Werkzeuges verwendbar.

## Patentansprüche

1. Reinigungs- oder Beistellwagen (1), der zumindest zwei bodenseitige Formteile (2) aufweist, die über wenigstens ein stab- oder stangenförmiges Verbindungselement (3) miteinander verbunden sind, wobei dem Verbindungselement (3) an den Formteilen (2) jeweils mindestens ein Rastelement (7) mit zumindest einer Federzunge (8) zugeordnet ist, wobei die zumindest eine Federzunge (8) in Haltestellung mit einem Rastvorsprung (9) in eine Rastausnehmung (10) am Verbindungselement (3) eingreift und wobei dem Rastelement (7) ein ringförmiges Sicherungselement (11) zugeordnet ist, welches in Haltestellung derart über das Rastelement (7) aufschiebbar ist, dass sein Ringumfang ein Auslenken der Federzunge (8) und ein Ausrasten ihres Rastvorsprunges (9) aus der Rastausnehmung (10) verhindert.

2. Reinigungs- oder Beistellwagen nach Anspruch 1, **dadurch gekennzeichnet, dass** das Rastelement (7) stutzenförmig ausgestaltet und aus zumindest zwei, vorzugsweise aus vier Federzungen (8) gebildet ist.

3. Reinigungs- oder Beistellwagen nach Anspruch 1 oder 2, **dadurch gekennzeichnet, dass** zwischen dem Rastelement (7) und dem Sicherungselement (11) eine Schraubverbindung oder eine in Sicherungsposition wirksame Rastverbindung vorgesehen ist.

4. Reinigungs- oder Beistellwagen nach einem der Ansprüche 1 bis 3, **dadurch gekennzeichnet, dass** der Reinigungswagen (1) zumindest eine Arbeits- und/oder Ablagefläche hat, die aus zumindest zwei, vorzugsweise aus drei, insbesondere formidentischen Formteilen gebildet ist und dass diese Formteile mittels zumindest zwei voneinander beabstandeten stab- oder stangenförmigen Verbindungselementen (3) verbunden ist.

5. Reinigungs- oder Beistellwagen nach einem der Ansprüche 1 bis 4, der zumindest ein Formteil aufweist, das mit einem Vertikalträger (4) verbindbar ist, wobei der Vertikalträger (4) als im Querschnitt unrunder Profilstab ausgestaltet ist, der in die komplementär geformte Aufnahmeöffnung (12) einer am Formteil (2) vorgesehenen Profilstab-Aufnahme (13) einsetzbar ist.

6. Reinigungs- oder Beistellwagen nach einem der Ansprüche 1 bis 5, **dadurch gekennzeichnet, dass** der Profilstab (4) wenigstens eine Durchstecköffnung hat, die in Gebrauchsstellung mit einer ihr zugeordneten Durchstecköffnung (19, 20) an zumindest einer die Aufnahmeöffnung (12) begrenzenden Umfangsseite, vorzugsweise an gegenüberliegenden Umfangsseiten der Profilstab-Aufnahme (13) fluchtet, und dass in die einander zugeordneten Durchstecköffnungen (19, 20) eine Sicherungsschraube, ein Sicherungssplint oder dergleichen Sicherungsmittel einsetzbar ist.

7. Reinigungs- oder Beistellwagen nach einem der Ansprüche 1 bis 6, **dadurch gekennzeichnet, dass** die Profilstab-Aufnahme mündungsseitig ein, in einer Einsetzöffnung (15) des Formteiles (2) verrastbares und vorzugsweise ringförmiges Einsetzteil (14) hat.

8. Reinigungs- oder Beistellwagen nach einem der Ansprüche 1 bis 7, **dadurch gekennzeichnet, dass** die die Aufnahmeöffnung (12) begrenzende Umfangswandung der Profilstab-Aufnahme (13) beziehungsweise ihres Einsetzteiles (14) zumindest einen auslenkbaren Wandungsabschnitt (17) hat, an dem zumindest ein, in einer zugeordneten Rastöffnung des Profilstabes (4) verrastbarer Rastvorsprung vorgesehen ist.

9. Reinigungs- oder Beistellwagen nach einem der Ansprüche 1 bis 8, **dadurch gekennzeichnet, dass** die die Aufnahmeöffnung begrenzende Umfangswandung der Profilstab-Aufnahme (13) beziehungsweise ihres Einsetzteiles (14) zumindest auf zwei gegenüberliegenden Umfangsseiten jeweils einen auslenkbaren Wandungsabschnitt (17) hat.

10. Reinigungs- oder Beistellwagen nach einem der Ansprüche 1 bis 9, **dadurch gekennzeichnet, dass** an dem zumindest einen Profilstab (4) eine Einstecköffnung zur Aufnahme eines stabförmigen Querträges (21) vorgesehen ist, dass dem Querträger (21) zumindest ein Querträger-Halter (22) zugeordnet ist, der mit einem Haltering den Profilstab (4) umgreift, dass der Querträger-Halter (22) aus zwei Ringteilen (23) gebildet ist, die sich zum Haltering ergänzen, dass an den Ringteilen (23) jeweils eine Anformung (24) vorgesehen ist, welche Anformungen (24) sich zu einer stutzenförmigen Querträger-Aufnahme ergänzen, dass an den Anformungen (24) jeweils zumindest ein Rastvorsprung (25) vorgesehen ist, welche Rastvorsprünge (25) in eine zugeordnete Rastausnehmung am Querträger (21) eingreifen und dass für jeden Querträger-Halter (22) ein ringförmiges Sicherungselement (26) vorgesehen ist, das derart auf die Querträger-Aufnahme aufschiebbar ist, dass die Rastvorsprünge (25) in den Rastausnehmungen gesichert sind.

## Claims

1. Cleaning or utility trolley (1) which comprises at least two moulded sections (2) at the bottom, connected by at least one bar- or rod-shaped connecting element (3), the connecting element (3) on the moulded sections (2) being associated with at least one latching element (7) with at least one spring tongue (8), the minimum of one spring tongue (8) engaging; in the retaining position, with a latching projection (9) in a latching recess (10) on the connecting element (3), and the latching element (7) being associated with an annular securing, element (11) which is adapted to be pushed over the latching element (7) in the retaining position in such a way that its annular circumference prevents the spring tongue (8) from being displaced and its latching projection (9) from disengaging from the latching recess (10).

2. Cleaning or utility trolley according to claim 1, **characterised in that** the latching element (7) is constructed as a connecting piece and is formed from at least two, preferably four spring tongues (8).

3. Cleaning or utility trolley according to claim 1 or 2, **characterised in that** between the latching element (7) and the securing element (11) is provided a screw connection or a latching connection which is effective in the securing position.

4. Cleaning or utility trolley according to one of claims 1 to 3,
**characterised in that** the cleaning trolley (1) has at least one work and/or set-down surface which is formed from at least two, preferably three moulded sections which are, in particular, identical in shape, and **in that** these moulded sections are connected by at least two bar- or rod-shaped connecting elements (3) at a spacing from one another.

5. Cleaning or utility trolley according to one of claims 1 to 4 which has at least one moulded section which can be connected to a vertical support (4), the vertical support (4) being in the form of a profiled bar of non-circular cross-section which can be inserted into the complementary accommodating opening (12) of a profiled bar socket provided on the moulded section (2).

6. Cleaning or utility trolley according to one of claims 1 to 5,
**characterised in that** the profiled bar (4) has at least one through-opening which in the position of use is aligned with a corresponding through-opening (19, 20) on at least one circumferential side bounding the accommodating opening (12), preferably on opposite circumferential sides of the profiled bar socket (13), and **in that** a locking screw, a locking splint or similar locking means can be inserted into the associated through-openings (19, 20).

7. Cleaning or utility trolley according to one of claims 1 to 5,
**characterised in that** the profiled bar socket has, at its mouth end, a preferably annular insertion member (14) which can be latched in an insertion opening (15) in the moulded section (2).

8. Cleaning or utility trolley according to one of claims 1 to 7,
**characterised in that** the circumferential wall of the profiled bar socket (13) delimiting the accommodating opening (12), or of the insertion member (14) thereof, has at least one deflectable wall portion (17) on which is provided at least one latching projection which can be latched in an associated latching opening in the profiled bar (4).

9. Cleaning or utility trolley according to one of claims 1 to 8,
**characterised in that** the circumferential wall of the profiled bar socket (13) delimiting the accommodating opening (12), or of the insertion member (14) thereof, has a deflectable wall portion (17) on at least two opposite circumferential sides.

10. Cleaning or utility trolley according to one of claims 1 to 9,
**characterised in that** an insertion opening for accommodating a rod-shaped transverse support (21) is provided on the minimum of one profiled bar (4), **in that** the transverse support (21) is associated with at least one transverse support holder (22) which embraces the profiled bar (4) with a retaining ring,
**in that** the transverse support holder (22) is formed from two annular members (23) which together make up the retaining ring, **in that** a shaped portion (24) is formed on each of the annular members (23), the shaped portions (24) together making up a connector-shaped socket for the transverse support, **in that** at least one latching projection (25) is provided on each of the shaped portions (24), said latching projections (25) engaging in an associated latching recess on the transverse support (21) and **in that**, for each transverse support holder (22), an annular securing element (26) is provided which can be pushed onto the socket for the transverse support in such a way that the latching projections (25) are secured in the latching recesses.

## Revendications

1. Chariot de nettoyage ou à usage multiple (1) qui comprend au moins deux pièces préformées (2) situées du côté du fond et qui sont reliées entre elles par l'intermédiaire d'au moins un élément de liaison en forme de barre ou de tige (3), dans lequel respectivement au moins un élément d'arrêt (7) avec au moins une languette souple (8) est associé à l'élément de liaison (3) au niveau des pièces préformées (2), dans lequel au moins une languette souple (8) pénètre en position de maintien avec une avancée d'arrêt (9) dans un évidement d'arrêt (10) de l'élément de liaison (3) et dans lequel un élément de blocage (11) de forme circulaire est associé à l'élément d'arrêt (7), lequel élément de blocage (11) peut, dans la position de maintien, être enfilé de telle façon par-dessus l'élément d'arrêt (7) que son pourtour circulaire empêche une déviation de la languette souple (8) et une sortie de son avancée d'arrêt (9) hors de l'évidement d'arrêt (10).

2. Chariot de nettoyage ou à usage multiple selon la revendication 1, **caractérisé en ce que** l'élément d'arrêt (7) est configuré en forme d'embout et est formé d'au moins deux, de préférence quatre, languettes souples (8).

3. Chariot de nettoyage ou à usage multiple selon la revendication 1 ou 2, **caractérisé en ce qu'**entre l'élément d'arrêt (7) et l'élément de blocage (11) est prévue une liaison vissée ou une liaison crantée qui agit en position de blocage.

4. Chariot de nettoyage ou à usage multiple selon l'une quelconque des revendications 1 à 3, **caractérisé en ce que** le chariot de nettoyage (1) possède au moins une surface de travail et/ou de débarras qui est formée d'au moins deux, de préférence trois, pièces préformées en particulier de forme identique et **en ce que** ces pièces préformées sont reliées entre elles au moyen d'au moins deux éléments de liaison en forme de barres ou de tiges (3) qui sont espacés l'un de l'autre.

5. Chariot de nettoyage ou à usage multiple selon l'une quelconque des revendications 1 à 4 qui comprend au moins une pièce préformée pouvant être reliée avec un support vertical (4), alors que le support vertical (4) est configuré comme barre de profilé de section en faux-rond qui peut être introduite dans l'ouverture de réception (12) mise en forme de manière complémentaire d'un élément de réception de la barre de profilé (13) prévu sur la pièce préformée (2).

6. Chariot de nettoyage ou à usage multiple selon l'une quelconque des revendications 1 à 5, **caractérisé en ce que** la barre de profilé (4) possède au moins une ouverture de traversée qui, en position d'utilisation, est en alignement avec une ouverture de traversée (19, 20) qui lui est associée et qui se trouve sur au moins un côté du pourtour délimitant l'ouverture de réception (12) de l'élément de réception de la barre de profilé (13), de préférence sur des côtés du pourtour opposés l'un à l'autre de cet élément de réception de la barre de profilé (13) et **en ce qu'**une vis de blocage, une goupille de blocage ou un moyen de blocage similaire peut être introduit dans les ouvertures de traversée (19, 20) associées l'une à l'autre.

7. Chariot de nettoyage ou à usage multiple selon l'une quelconque des revendications 1 à 6, **caractérisé en ce que** l'élément de réception de la barre de profilé possède du côté de l'embouchure un insert (14), de préférence de forme annulaire, pouvant être verrouillé dans une ouverture d'introduction (15) de la pièce préformée (2).

8. Chariot de nettoyage ou à usage multiple selon l'une quelconque des revendications 1 à 7, **caractérisé en ce que** la paroi du pourtour délimitant l'ouverture de réception (12) de l'élément de réception de la barre de profilé (13) ou de son insert (14) possède au moins une section de paroi pouvant être déviée (17), sur laquelle est prévue au moins une avancée d'arrêt pouvant être verrouillée dans une ouverture de verrouillage associée de la barre de profilé (4).

9. Chariot de nettoyage ou à usage multiple selon l'une quelconque des revendications 1 à 8, **caractérisé en ce que** la paroi du pourtour délimitant l'ouverture de réception de l'élément de réception de la barre de profilé (13) ou de son insert (14) possède au moins sur deux côtés du pourtour opposés l'un à l'autre respectivement une section de paroi pouvant être déviée (17).

10. Chariot de nettoyage ou à usage multiple selon l'une quelconque des revendications 1 à 9, **caractérisé en ce que** sur au moins une barre de profilé (4) est prévue une ouverture d'emmanchement pour recevoir une traverse en forme de barre (21), **en ce qu'**à la traverse (21) est associé au moins un support de traverse (22) qui entoure la barre de profilé (4) à l'aide d'une bague de maintien, **en ce que** le support de traverse (22) est formé de deux parties annulaires (23) qui se complètent pour former la bague de maintien, **en ce que** sur les parties annulaires (23) est prévu respectivement un élément intégré dans la forme (24), lesquels éléments intégrés dans la forme (24) se complètent pour former un réceptacle de traverse en forme d'embout, **en ce que** sur les éléments intégrés dans la forme (24) est prévue respectivement au moins une avancée d'arrêt (25), lesquelles avancées d'arrêt (25) pénètrent dans un évidement d'arrêt associé se trouvant sur la traverse (21) et **en ce que** pour chaque support de traverse (22) est prévu un élément de blocage de forme annulaire (26) qui peut être enfilé de telle façon sur le réceptacle de traverse que les avancées d'arrêt (25) soient bloquées dans les évidements d'arrêt.
